# DEMANDE DE BREVET EUROPEEN

(11) **EP 0 623 789 A1**
(43) Date de publication de la demande: **09.11.1994**
(21) Numéro de dépôt: 94400942.2
(22) Date de dépôt: 02.05.1994
(51) Int. Cl.: F24F 13/02, F24F 12/00

(54) **Système de conduite pour installation de climatisation de local ou similaire**

(30) Priorité: 04.05.1993 FR 9305285
(71) Demandeur: SARI INGENIERIE, F-92800 Puteaux (FR)
(72) Inventeur: Strulik, Wilhelm P., F-89500 Villeneuve-Sur-Yonne (FR); Elluin, Patrice, F-75016 Paris (FR); Giudicelli, Pascal, F-78530 Buc (FR); Reiter, Ingo, F-89500 Villeneuve-Sur-Yonne (FR)
(74) Mandataire: Warcoin, Jacques

(57) **Abrégé**

L'invention concerne un système de conduite pour installation de climatisation de local ou similaire.

Un premier et un deuxième conduits (12,14) pour le transport du gaz de soufflage de climatisation et du gaz de reprise de climatisation sont logés côte à côte dans une gaine externe (16) avec laquelle ils délimitent un volume libre (20).

Les premier et deuxième conduits (12, 14) s'en trouvent protégés et isolés thermiquement et leur pose s'en trouve simplifiée.

## Description

La présente invention a pour objet un système de conduite pour installation de climatisation de local ou similaire.

De façon plus précise, l'invention concerne la réalisation de conduites ou gaines pour la circulation de gaz ou d'air servant à réaliser la climatisation ou le conditionnement d'un local pour en réguler la température ou pour assurer un renouvellement périodique de l'air dans ce local.

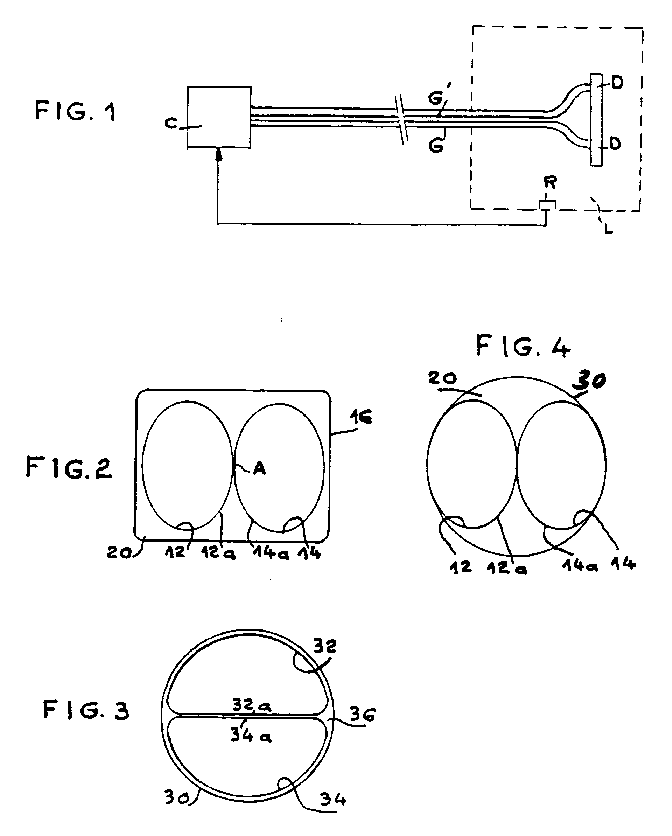

La figure 1 annexée illustre un exemple d'installation de climatisation pour un local. Sur cette figure, on a représenté un local L à climatiser. D'une façon connue en elle-même, la climatisation est réalisée par une centrale de climatisation C spécifiquement associée au local L. La centrale C est reliée au local L par un premier conduit G avec isolation qui amène au local l'air de climatisation, ce conduit G se terminant par un diffuseur D. Un deuxième conduit G' sans isolation sert à la reprise de l'air dans le local L à partir du diffuseur D pour le restituer à la centrale de climatisation C qui le traitera avec ou sans recyclage. En outre, de préférence, le local est muni d'un dispositif de commande ou de régulation R qui permet de commander le fonctionnement de la centrale de climatisation C en fonction d'une valeur de consigne ou en fonction des desiderata des occupants du local.

Comme cela est connu, les conduits de climatisation G et G' sont en général disposés entre un faux plafond et la dalle de séparation de l'étage supérieur. On comprend que la présence de ces deux conduits reliant une centrale de climatisation à un seul local fait que, dans l'espace entre le faux plafond et le plafond, il est nécessaire de monter un très grand nombre de conduits correspondant aux différents locaux. En outre, on comprend que le montage de ces conduits dans l'espace mentionné ci-dessus est relativement encombrant, inesthétique et fragile.

Un objet de la présente invention est de fournir un système de conduite de gaz notamment pour une installation de climatisation de local ou similaire qui permette de s'affranchir des problèmes mentionnés ci-dessus et, notamment, de simplifier considérablement la mise en place des conduits et donc d'abaisser le coût total de la réalisation de l'installation de climatisation.

Pour atteindre ce but, et au lieu de deux conduits distincts (un isolé, l'autre non isolé), le système de conduite pour installation de climatisation de local ou similaire se caractérise en ce qu'il forme un monoproduit avec tous les avantages supplémentaires tels que faible encombrement, esthétique, facilité et rapidité de pose, et résistance aux chocs. Ce monoproduit comprend :
- un premier conduit pour le transport du gaz de soufflage de climatisation,
- un deuxième conduit pour le transport du gaz de reprise de climatisation, disposé à côté dudit premier conduit, et
- une gaine externe dans laquelle sont insérés lesdits premier et deuxième conduits pour assurer une solidarisation mécanique desdits deux conduits tout en laissant un volume libre entre la gaine externe et les premier et deuxième conduits pour réaliser une isolation thermique du gaz dans lesdits premier et deuxième conduits vis à vis de l'environnement. Cette disposition desdits premier et deuxième conduits dans une gaine externe crée un effet "échangeur" et un transfert thermique entre :
- le gaz contenu dans les deux conduits de soufflage et de reprise,
- le gaz situé entre lesdits deux conduits et la gaine externe,
- le gaz ambiant situé à l'extérieur de la gaine externe.
   Le bilan thermique de cet effet "échangeur" permet de ne pas isoler les différents conduits ou gaines tel que cela est réalisé classiquement.

On comprend que, grâce aux dispositions de l'invention, les deux conduits qui doivent être associés pour réaliser la climatisation d'un local sont mécaniquement rendus solidaires grâce à la présence de la gaine externe. La mise en place des conduits est donc considérablement simplifiée. En outre, la gaine externe constitue d'une certaine manière une protection mécanique des conduits proprement dits de transport de gaz de climatisation. Enfin, l'espace entre la gaine externe et les deux conduits internes permet de réaliser une certaine isolation thermique des gaz circulant dans les deux conduits internes.

Selon un premier mode de mise en oeuvre, les faces en regard des premier et deuxième conduits sont conformées de telle manière que leur contact mutuel soit réduit. On comprend qu'ainsi les échanges thermiques entre les gaz circulants dans les deux conduits soient réduits.

Au contraire, selon un autre mode de réalisation, les faces en regard des premier et deuxième conduits sont conformées de telle manière que leur contact mutuel représente une partie significative desdites faces. Ce mode de réalisation est avantageux dans certaines conditions de climatisation dans la mesure où il favorise les échanges thermiques entre le gaz de climatisation et le gaz de reprise.

Selon des modes préférés de réalisation, il est possible de recouvrir d'un matériau isolant un des conduits ou les deux conduits ou encore de recouvrir d'un matériau isolant la gaine externe.

D'autres caractéristiques et avantages de la présente invention apparaîtront mieux à la lecture de la description qui suit de plusieurs modes de réalisation de l'invention donnés à titre d'exemples non limitatifs. La description se réfère aux figures annexées sur lesquelles :
- la figure 1, déjà décrite, montre d'une façon simplifiée l'ensemble d'une installation de climatisation ;
- la figure 2 montre en coupe transversale un premier mode de réalisation du système de conduite selon l'invention ;
- la figure 3 montre en coupe transversale un deuxième mode de réalisation du système de conduite selon l'invention ;
- la figure 4 montre en coupe transversale un troisième mode de réalisation du système de conduite selon l'invention ;
- les figures 5 et 6 montrent des variantes du premier mode de réalisation du système de conduite, illustrant différentes possibilités d'isolation thermique des gaines ;
- d'autres cas de figure sont réalisables en associant différemment les caractéristiques des figures précédentes ; et
- la figure 7 est une vue partielle, en coupe longitudinale, d'une gaine ou d'un conduit du système de conduite, montrant un mode préféré de réalisation de ces gaines ou conduits avec une paroi complexe constituée d' une couche ou de plusieurs couches contrecollées.

En se référant tout d'abord à la figure 2, on va décrire un premier mode de réalisation de l'invention. Le système de conduite est en fait constitué par deux conduits de préférence identiques 12 et 14 disposés côte à côte selon la direction de leur longueur, qui sont insérés à l'intérieur d'une gaine dite gaine externe qui est, de préférence, de même nature et de même longueur que les conduits 12 et 14. Dans ce mode de réalisation, les conduits internes 12 et 14 ont en section droite une forme d'ovale ou d'ellipse obtenue de préférence par la déformation d'un conduit à section droite circulaire qui a par exemple un diamètre de 160 mm. La gaine externe 16 est par exemple à section droite rectangulaire (figure 2) ou circulaire (figure 4), de dimensions 250 mm par 240 mm, cette gaine 16 étant dans sa configuration rectangulaire obtenue par déformation par exemple d'une gaine à section droite circulaire de diamètre de 282 mm.

Comme le montre la figure 2, la gaine externe 16, en entourant les deux conduits 12 et 14, réalise une liaison mécanique entre les conduits internes 12 et 14. On comprend qu'ainsi la mise en place des deux conduits correspondant à un même local est très simplifiée. De plus, dans ce mode de réalisation, on voit que, en ce qui concerne les faces en regard 14a et 12a des conduits 14 et 12, celles-ci n'ont qu'un contact très réduit et sensiblement ponctuel en section droite (point A) . On comprend qu'ainsi les échanges thermiques entre les gaz circulant dans les deux conduits sont réduits. En outre, on voit que l'espace 20 s'étendant à l'intérieur de la gaine externe 16 et à l'extérieur des conduits 12 et 14 assure une certaine isolation thermique vis à vis des gaz circulant entre les conduits 12 et 14 et l'environnement de la gaine.

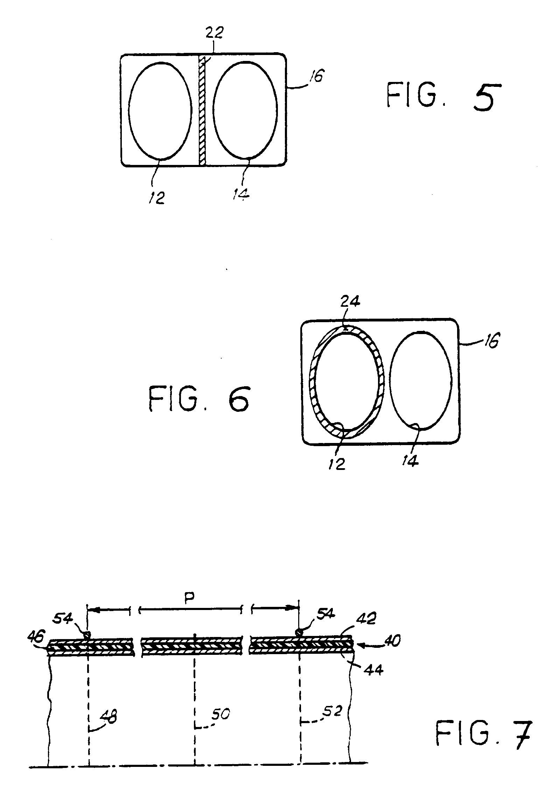

Les figures 5 et 6 montrent des variantes de ce premier mode de réalisation. On retrouve la gaine externe 16 et les conduits internes 12 et 14. Dans certains cas d'installation liés aux conditions particulières de climatisation ou de conditionnement, il peut être intéressant d'interposer, entre les conduits 12 et 14, une paroi longitudinale 22 s'étendant à l'intérieur de la gaine 16 selon la direction de la longueur commune à ces conduits. Cette paroi 22 est réalisée en un matériau isolant thermique qui assure donc une meilleure isolation thermique entre les gaz circulant dans les deux conduits.

Dans la variante de réalisation illustrée par la figure 6, c'est le conduit 12 qui est directement recouvert de façon externe par un matériau d'isolation 24. On comprend également que les deux conduits 12 et 14 pourraient être recouverts par un matériau d'isolation thermique ou que la gaine externe 16 pourrait être recouverte par un tel matériau selon les cas particuliers de mise en oeuvre. Le choix de la solution dépend des conditions spécifiques de l'ensemble de locaux à climatiser.

Si l'on se réfère maintenant à la figure 3, on voit que la gaine externe qui porte la référence 30 a en section droite une forme circulaire, par exemple de diamètre de l'ordre de 250 mm. Les conduits internes 32 et 34 ont en section droite une forme semi-circulaire correspondant à la section circulaire de la gaine externe 30. Ces conduits internes sont par exemple obtenus par un remodelage de conduits à section circulaire de diamètre 160 mm pour obtenir cette forme semi-circulaire. Selon ce mode de réalisation, on voit que le contact entre les faces en regard 32a et 34a des deux conduits internes est important et correspond sensiblement à la totalité de ces faces en regard. On comprend qu'ainsi on favorise les échanges thermiques entre les gaz circulant dans les deux conduits internes. On voit également qu'il existe un espace 36 à l'intérieur de la gaine externe 32 et à l'extérieur des conduits internes 32 et 34. Cet espace permet de réaliser une isolation thermique entre les gaz circulant dans les conduits internes et l'environnement.

Il va de soi que ce deuxième mode de réalisation peut présenter des variantes illustrées par les figures 5 et 6 en liaison avec le premier mode de réalisation.

En se référant maintenant à la figure 7, on va décrire un mode préféré de réalisation d'un conduit ou de la gaine. La paroi des conduits ou de la gaine externe, qui porte la référence générale 40, est de préférence réalisée par un sandwich constitué par trois feuilles. Les feuilles externe 42 et interne 46 sont par exemple en aluminium alors que la feuille interne 46 est réalisée en polyester. Dans ce mode préféré de réalisation, les feuilles d'aluminium ont une épaisseur de l'ordre de 12 microns et la feuille de polyester 46 une épaisseur de 6 microns. Les feuilles sont de préférence collées entre elles, constituant ainsi un complexe homogène, et peuvent par exemple être contrecollées, réalisant ainsi une paroi multicouche composée de 2 ou plusieurs complexes.

On comprend qu'on obtient ainsi un conduit ou une gaine dont le poids linéaire est très réduit bien que la résistance mécanique en soit suffisante pour l'utilisation envisagée. En outre, la paroi ainsi obtenue est suffisamment souple pour qu'on puisse définir des traits de pliage tels que 48, 50, 52 permettant de plier en accordéon le conduit ou la gaine selon le sens de sa longueur. Une telle disposition permet de réduire très considérablement l'encombrement des conduits ou de la gaine lors de leur transport vers leur lieu de montage. En revanche, une fois dépliés, ces conduits et gaines présentent une surface interne très lisse qui permet de réduire les pertes de charge. De plus, l'absence d'irrégularité dans la face interne des conduits limite les risques de retenue de poussières et autres qui favorisent le développement de microorganismes.

Pour assurer la définition de la forme de la section droite de chaque conduit ou gaine, on fixe sur la face externe de la paroi 40 des spires de maintien celles que 54 dont la forme définit la section droite du conduit ou de la gaine. Ces spires 54 sont par exemple constituées par un fil métallique hélicoïdal dont le diamètre est par exemple de l'ordre de 1,5 mm. Selon un mode préféré de réalisation, le pas p entre deux spires de maintien consécutives est par exemple de l'ordre de 25 mm.

Les essais de déperdition thermique menés par les inventeurs auprès du Cétiat montrent que les échanges thermiques tels que définis en page 2 se traduisent par une perte calorifique d'environ 1 W/ml et un gain frigorifique d'environ 2 W/ml selon les figures, ce qui se traduit sur le plan du bilan du coût énergétique de l'installation de climatisation concernée par cette invention par une économie conséquente.

## Revendications

1. Système de conduites pour installation de climatisation de local ou similaire, caractérisé en ce qu'il comprend:
- un premier conduit (12; 32) pour le transport du gaz de soufflage de climatisation;
- un deuxième conduit (14; 34) pour le transport du gaz de reprise de climatisation, disposé à côté dudit premier conduit; et
- une gaine externe (16; 30) dans laquelle sont insérés lesdits premier et deuxième conduits pour assurer une solidarisation mécanique desdits deux conduits tout en laissant un volume libre entre la gaine externe (16; 30 ) et les premier et deuxième conduits (12, 14; 32, 34) pour réaliser une isolation thermique du gaz dans lesdits premier et deuxième conduits vis à vis de l'environnement.

2. Système de conduite selon la revendication 1, caractérisé en ce que les faces en regard (12a, 14a) des premier et deuxième conduits (12, 14) sont conformées de telle manière que leur contact mutuel soit réduit.

3. Système de conduite selon la revendication 2, caractérisé en ce que lesdits premier et deuxième conduits (12, 14) ont en section droite la forme d'un cercle ou d'un ovale.

4. Système de conduite selon la revendication 1, caractérisé en ce que les faces en regard (32a, 34a) des premier et deuxième conduits (32, 34) sont conformées de telle manière que leur contact mutuel représente une partie significative desdites faces.

5. Système de conduites selon la revendication 4, caractérisé en ce que les faces en regard (32a, 34a) des premier et deuxième conduits (32, 34) sont sensiblement planes.

6. Système de conduite selon la revendication 5 caractérisé en ce que, en section droite, lesdits premier et deuxième conduits (32, 34) ont sensiblement une forme semi-circulaire et en ce que ladite gaine externe (30) a une forme sensiblement circulaire.

7. Système de conduites selon la revendication 3, caractérisé en ce que la section droite de ladite gaine externe (16) est sensiblement rectangulaire.

8. Système de conduites selon la revendication 3, caractérisé en ce que la section droite de ladite gaine externe (16) est sensiblement circulaire.

9. Système de conduite selon l'une quelconque des revendications 1 à 8, caractérisé en ce qu'un matériau isolant thermique (22) est disposé dans ladite gaine externe (16; 30) entre les faces en regard desdits premier et deuxième conduits (12, 14; 32, 34).

10. Système de conduite selon l'une quelconque des revendications 1 à 8, caractérisé en ce qu'au moins un desdits premier et deuxième conduits (12, 14; 32, 34) est recouvert d'un matériau isolant thermique (24).

11. Système de conduite selon l'une quelconque des revendications 1 à 10, caractérisé en ce que ladite gaine externe (16, 30) est recouverte d'un matériau isolant thermique.

12. Système de conduite selon l'une quelconque des revendications 1 à 11, caractérisé en ce que la paroi de la gaine et/ou des conduits est constituée par deux feuilles d'aluminium (42, 44) entre lesquelles est fixée une feuille de polyester (46) en une ou plusieurs couches.

13. Système de conduite selon l'une quelconque des revendications 1 à 12, caractérisée en ce que la paroi de la gaine et/ou des conduits est munie de fils de renforcement (54) s'étendant dans des plans sensiblement perpendiculaires à la longueur de ladite gaine et/ou desdits conduits.

14. Système de conduite selon l'une quelconque des revendications 1 à 13, caractérisé en ce que les parois de la gaine et des conduits peuvent être pliées "en accordéon" selon des plis (48, 50, 52) disposés sensiblement perpendiculairement à la longueur de ladite gaine et desdits conduits.
